# EUROPEAN PATENT SPECIFICATION

(11) **EP 4 495 471 B1**
(45) Date of publication and mention of the grant of the patent: **09.12.2026**
(21) Application number: 23461629.0
(22) Date of filing: 20.07.2023
(51) Int. Cl.: F16L 29/00, B64D 11/04, F16K 3/08, F16K 31/528, F16L 29/02, F16L 35/00

(54) **WATER PORT CLOSURE ASSEMBLY**
WASSERANSCHLUSSVERSCHLUSSANORDNUNG
ENSEMBLE DE FERMETURE D'ORIFICE D'EAU

(43) Date of publication of application: 22.01.2025
(73) Proprietor: Goodrich Corporation, Charlotte, NC 28217 (US)
(72) Inventor: KROCZEK, Piotr Jacek, 56-400 Nieciszów (PL); SWIRNIAK, Pawel, 59-230 Prochowice (PL); SLOMIANY, Krzysztof, 59-225 Jerzmanowice (PL)
(74) Representative: Dehns

(56) References cited:
- EP-A1- 4 145 034
- DE-B- 1 153 581
- US-B2- 6 959 729

## Description

### TECHNICAL FIELD

The present invention is concerned with providing a closure assembly for ports in a water system, such as the fill and overflow ports of a water system. The water system can, for example, be a system for providing potable or fresh water in an aircraft.

### BACKGROUND

Water systems often include a tank or storage vessel to store water which can then be plumbed to other parts of the system to provide water to different parts of the system from the storage tank/vessel. The tank will need to be periodically re-filled. Typically, the tank is provided with a fill port to which a fill line, connected to a source of water, is connected for re-filling the tank from the source. The tank may also be provided with an overflow or overfill line via which water can exit the tank if the tank is overfilled. The overflow water exits from an overflow port on the tank. During the tank filling process, the fill port, and, where present, the overflow port, will be open. In some applications, the ports are left open after filling. The ports may be provided in an operating panel that is covered by a door or panel when not in use. In certain environments, e.g. where the tank is subjected to movement or vibration or in environments where debris or contaminants exits which should not be allowed to get into the tank, a closure or cap assembly is provided at the ports to close the port(s) when not being filled. In an arrangement with a fill port and an overflow port, each port may be provided with its own cap or closure or, alternatively, a single closure can be provided that covers both ports, when closed. Such assemblies may be used, for example, in aircraft. An aircraft typically has water stations in the cabin for dispensing drinking water during flight. The aircraft has a storage tank filled with potable water and plumbing to provide water from the tank to the stations as required. The tank is re-filled between flights by ground crew, by connecting an external source of water, e.g. a water truck, to the tank via a hose connected to the fill line attached to the fill port.

Whilst existing closure arrangements are effective in closing the ports, they are typically hinged relative to the ports in such a way that they require a large area around the ports to allow them to open and close. Typically, an arm or lever is attached to the caps and is moved in a large arc to open the caps. In environments where space is limited e.g. in aircraft, this is undesirable and there is a need for an improved port closure assembly that provides effective closure but also allows the closure to be opened and closed within a limited space. In addition, repeated opening and closing of the closure components about a hinge causes wear and means that the parts need to be replaced long before their life would otherwise expire.

Document EP 4 145 034 A1 relates to caps for ports or fittings in fluid systems such as water systems, for example in potable water systems on aircraft.

Document US 6,959,729 B2 discloses a control cartridge for regulating the water flow at a water outlet of a fitting.

### SUMMARY

According to the claimed invention, there is provided a hydraulic port assembly as defined by claim 1.

### BRIEF DESCRIPTION

Examples of the assembly according to the claimed invention will be described by way of example only and with reference to the drawings. It should be noted that variations are possible within the scope of the claims.
Figure 1 is a perspective view of an example of a known closure assembly for a fill port and an overflow port of a water system.
Figures 2A and 2B illustrate, respectively, an assembly such as that shown in Figures 1 in the closed and opened positions
Figure 3 is a perspective view of an example of a closure assembly according to the claimed invention.
Figure 4 is a sectional view of a closure assembly as shown in Fig. 3.
Figure 5 is a detailed view of part of a closure assembly as shown in Fig. 3.
Figure 6 shows component parts of an assembly as shown in Figure 5.
Figure 7 shows a sectional view of the assembly in an open position in use.
Figure 8 is provided to example an example of the assembly with an automatic return to the open position.
Figures 9A and 9B illustrate operation of the assembly.
Figures 10A and 10B show, for comparison, a housing part of an assembly according to the claimed invention and a known housing part of a known assembly.

### DETAILED DESCRIPTION

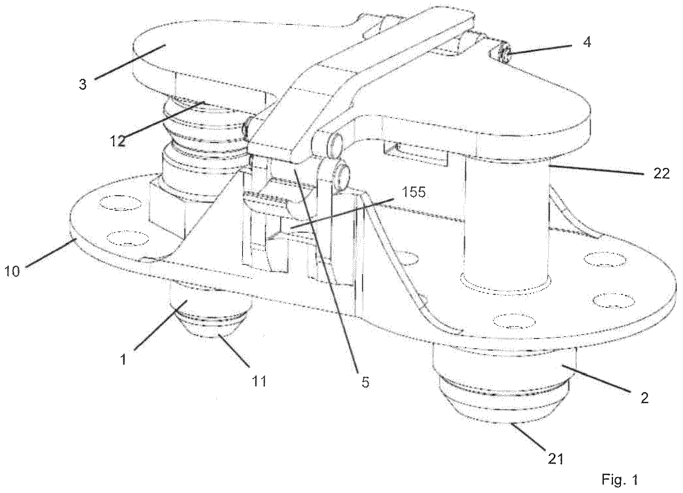

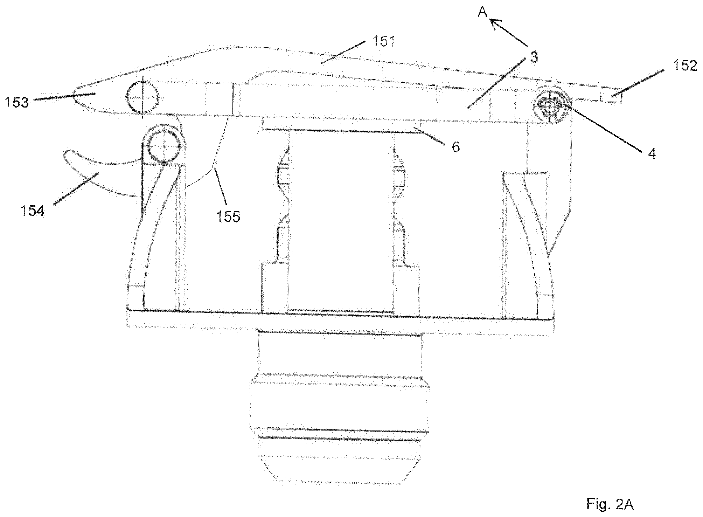

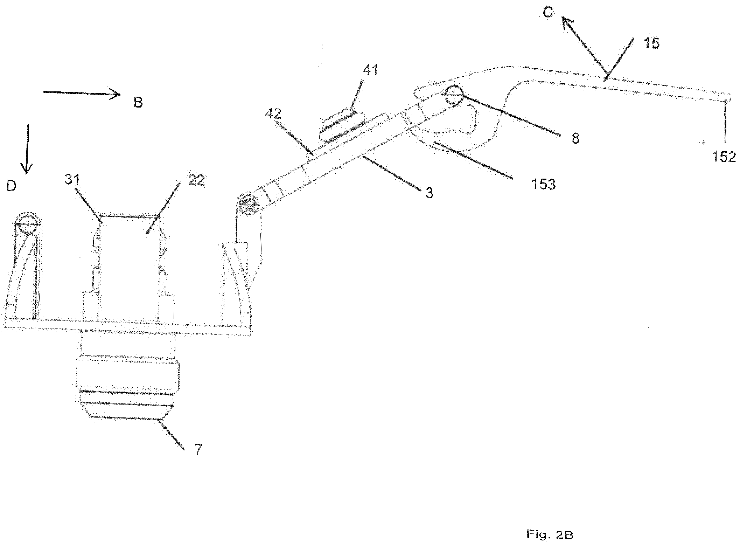

By way of background, an example of a known port closure assembly will first be described, with reference to Figs. 1, 2A and 2B.

In this assembly, a fill port 1 and an overflow port 2 are provided in a housing 10, and are configured to be attached to a tank to be filled via the assembly. The first end 12 of the fill port 1 is provided with a respective fitting 31 configured to be fluidly connected to a fill line (not shown) when the tank is being filled. The first end 22 of the overflow port 2 is provided with a fitting configured to be fluidly connected to an overflow line (not shown). A cap 3 is provided to cover the first ends 12, 22 of the fill and overflow ports in the closed state. In the example shown, a single cap is provided that covers both ports 1, 2 as this simplifies the closing operation by the user and reduces the risk of a port being inadvertently left open after filling. Other known assemblies have a separate cap for each port.

The cap 3 is mounted to the assembly housing 10 by a hinge arrangement 4 adjacent the first ends of the ports, and is provided with a lever and latch mechanism 5 to open and close the cap 3. The inner surface of the cap, that comes into contact with the first end of the port(s) when closed, is preferably provided with a seal 6. An additional seal, such as an O-ring seal 7, may also be provided around the first end of the port(s). The inner surface of the cap may be formed with respective plugs or protrusions 41, 42 arranged to fit into the port fittings when the cap is closed.

In the example, the latch and lever mechanism includes a lever 15 having a lever body 151, a lever end 152 and a latch end 153. When the cap 3 is in the closed position, the lever body 151 lies across the outer surface of the cap, essentially flat against the cap, with the lever end 152 adjacent the hinge 4. The latch end 153 includes a catch or claw 154 that secures in a recess or detent 155 on the side of the housing opposite the hinge 4. The closed position is shown in Fig. 2A.

To open the cap 3, the lever end 152 first needs to be lifted away from the cap, in the direction of arrow A in Fig. 2A to cause the latch end 153 to move the claw 154 out of engagement with the detent 155. The lever 15 is then moved in an arc movement (arrow B in Fig. 2B) about the hinge 4. As the latch end of the lever is attached to the cap 3 (e.g. by a pin 8), the movement of the latch causes corresponding movement of the cap 3 about the hinge 4 to move the cap 3 out of engagement with the first end of the port(s) (Fig. 2B). In an example, not shown, where each port has its own cap, the opening motion would be similar for each cap 3.

To close the cap 3, the lever 15 is then moved in an arc relative to the housing (arrow C in Fig. 2B) opposite to the opening direction B, moving the lever and the cap about the hinge 4 to close over the port and to bring the latch end 154 into engagement with the detent 155. The lever is then brought down (arrow D) towards the outer surface of the cap 3 to the original position, essentially flat against the cap 3 (Fig. 2A) and the latch end locks behind the detent.

As can be seen from, in particular, Fig. 2B, the arcuate motion of the lever and the cap defines a large range of movement relative to the size of the overall assembly and would require a large area above the ports to allow the cap to be opened and closed.

Another problem that has been observed with such assemblies, is that due to the hinge arrangement between the cap and the port, the seals on the inner surface of the cap and/or between the cap and the port or fitting suffer from unequal loading during opening and closing of the caps. The parts of the seal closer to the hinge will become pinched and suffer excess loading compared to the seal parts further away from the hinge. Also, because of the rotational motion in bringing the cap into position on the port, there is a risk that the cap parts will not immediately locate in the correct central position, and can press on the seals. This can cause uneven wear on the seals and adversely affect their proper functioning.

The repeated movement of the lever about the hinge also causes wear of the closure parts including the hinge part of the housing. As this is formed integrally with the housing, which is a fully machined part, such a housing is expensive and time consuming to manufacture.

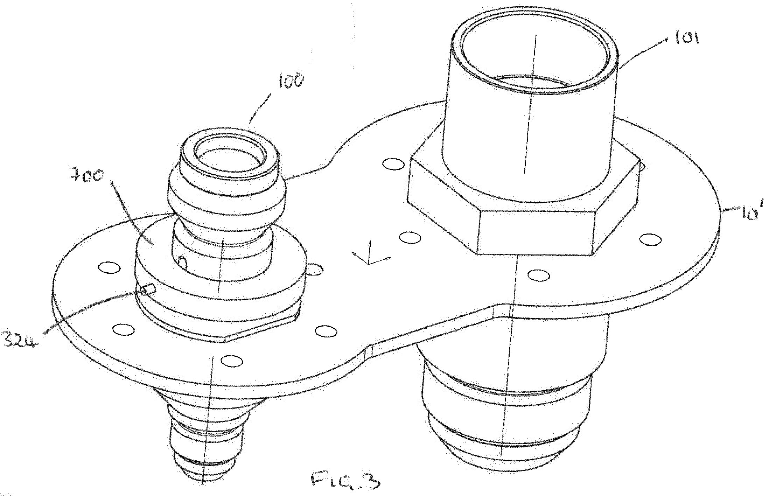

The present invention provides a hydraulic port assembly having an improved closure assembly that is integrated in a hydraulic port e.g. the fill port, and requires less space to open and close the cap(s), and that is smaller and simpler and less expensive to manufacture. The assembly can also address the problem of uneven wear on the seals and wear on the latch and hinge parts. An example will be described with reference to Figs. 3 to 9.

In the same way as shown in Figs. 1 and 2, the closure assembly of the claimed invention is provided for a fill port 100 and an overflow port 200 provided in a housing 10'. The present invention can be applied to other hydraulic ports other than fill and/or overflow ports, but will be described here in relation to a fill port by way of example. As in the example described above, the first end 101 of the fill port and the first end 201 of the overflow port are configured to fluidly connect to the storage tank. The fittings 110 and 210 at the second ends of the ports are configured to, respectively, fluidly connect to the fill line and the overflow line (not shown) during filling. A flow channel 111, 211 extends from the fittings, through the port, to the first ends. The closure assembly of the claimed invention is, however, different to the known assembly described above. Rather than the closure being in the form of a cap provided over the fill ports, the closure is formed within the fill port as will be described further below, and may be activated to open when a connector e.g. of a fill hose is connected to the port and/or to close when a connector/fill hose is detached from the port.

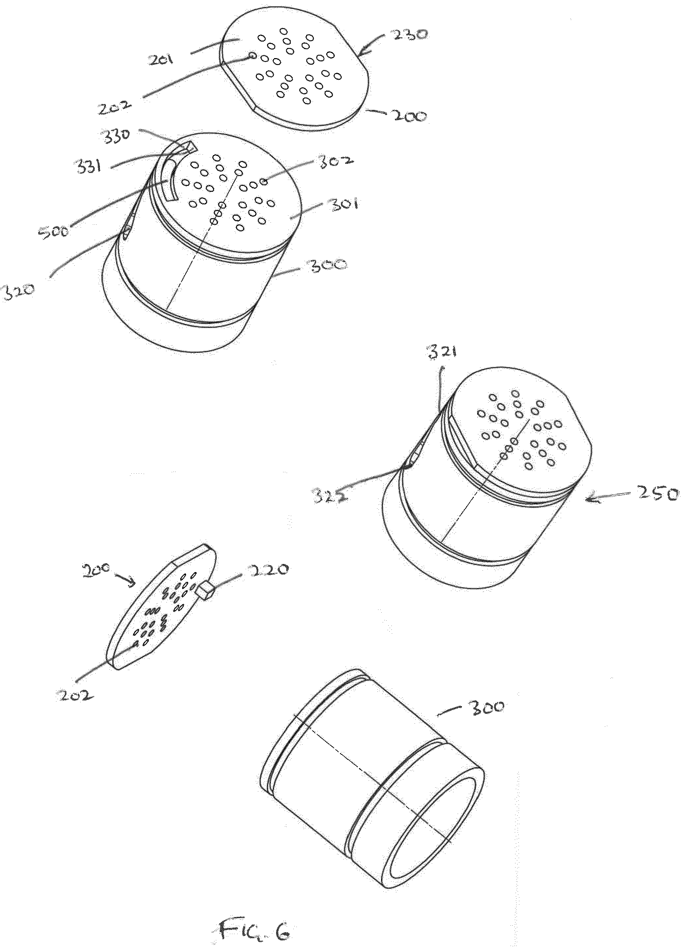

The closure assembly 100 according to the claimed invention includes a first filter part 200 having perforations 202 (see Fig. 6) formed therein, arranged to be located in the fill port 100 extending across the flow channel 102 between the first and second ends 103, 104 of the fill port 100. In some examples, the assembly may make use of the filter that will typically be included in a fill port. This is often a mandatory requirement for fill ports to avoid ingress of contaminants via the fill port. Conventionally, a filter plate having perforations formed therein is located within the fill port, extending across the flow channel formed between the first and second ends of the fill port. The perforations are sized to prevent debris or contaminants passing through the filter to the second end of the fill port. The closure assembly of the claimed invention may use this filter as the first filter part 200. In a fill port assembly that does not already include such a filter, the closure assembly of the claimed invention provides a first filter part 200 comprising a filter plate 201 (see Fig. 6) having perforations 202 formed therein, arranged to be located within the fill port 100, extending across the flow channel 102 formed between the first and second ends 103, 104 of the fill port.

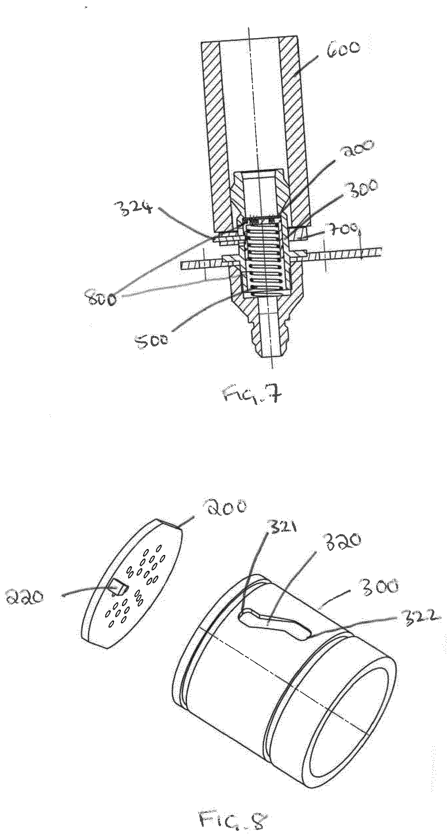

The closure assembly of the claimed invention also comprises a second filter part 300 having perforations formed therein (see Fig. 6), arranged to be located in the fill port extending across the flow channel between the first and second ends of the fill port, the second filter part 300 being rotatable (about the fill port axis A extending in the fluid flow direction) relative to the first filter part (200), and wherein, as best seen in Figs. 8A and 8B) the perforations 202 of the first filter part 200 and the perforations 302 of the second filter part 300 are arranged such that in a first position of rotation of the second filter part relative to the first filter part, the perforations of the second filter part are aligned with the perforations of the first filter part to permit fluid flow through the aligned perforations, and in a second position of rotation of the second filter part relative to the first filter part, the perforations of the second filter part are out of alignment with the perforations of the first filter part such that the second filter part prevents the flow of fluid past the first and second filter parts.

The closure assembly is configured with means for applying rotation to the second filter part. This is implemented (as described further below) such that application of an external force to the second filter part, e.g. an axial force such as may be provided when a hose or connected is attached to the first end of the fill port causes the second filter part to rotate, relative to the first filter part, to the second position. The assembly may also be configured such that the second filter is biased to return to the first position when such force is removed. In an example, described further below, the closure assembly includes a spring 500 arranged to hold the second filter part axially relative to the first filter part but to permit the second filter part to rotate relative to the first filter part.

Examples will now be described in more detail, with reference to Figs. 3 to 9.

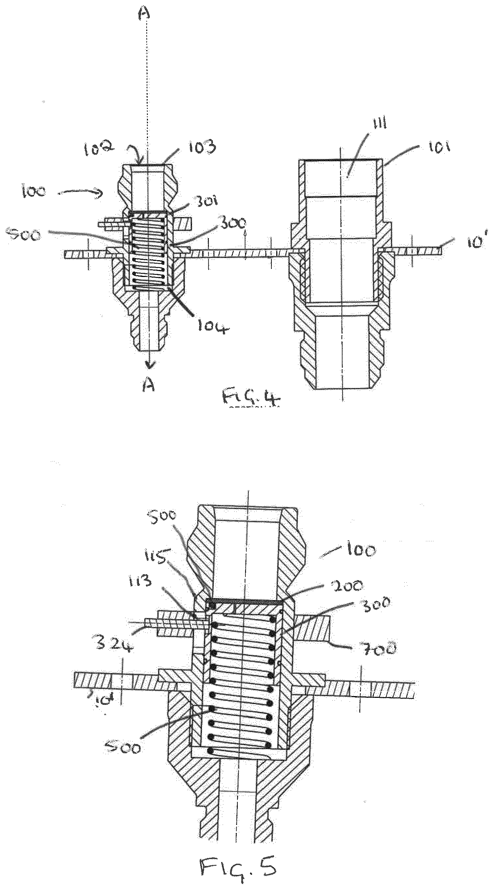

Figs 3 and 4 show a perspective view and a sectional view of an example of a hydraulic port assembly according to the claimed invention.

As with the known fill port assemblies, a housing 10' is provided through which a port 100 (e.g. a fill port or other hydraulic port) is mounted. In the example shown, a second port 101 e.g. an overflow port may also be mounted in the housing 10', but the assembly of the claimed invention can also be applied to a hydraulic port assembly which comprises only one port. The housing 10' may be in the form of a simple plate for supporting the port(s).

The first end 103 of the fill port, on one side of the housing 10', is arranged to be attached, in use, to an external connector and/or fill hose. The second end 104 of the fill port, on the other side of the housing 10' is arranged to be in fluid communication with the tank or reservoir to be filled. A fluid flow channel 102 is defined, along axis A, between the first and the second ends.

Located within the fluid flow channel between the first and second ends is a first filter part 200. As will be described further below, this may be in the form of a plate 201 that, when in position in the flow channel, extends across the diameter of the channel. The plate is provided with perforations 202 through which fluid may flow along the flow channel. The perforations are sized to prevent the passage of undesired debris or contaminants past the filter. As mentioned above, in many applications, e.g. in aircraft systems, such filters are mandatory and so the first filter part 200 will already be present. If not, to realise the closure assembly of this invention, such a first filter part 200 should be provided to be mounted into the flow channel.

The second part of the closure assembly according to the claimed invention is a second filter part 300, which also extends across the flow channel and is provided with perforations 302. The second filter part 300 is arranged to be axially aligned with (axially adjacent to) the first filter part in the flow channel. The second filter part may also be in the form of a plate or, as shown in this example, in the form of a hollow cylinder having a plate end 301 in which the perforations 302 are formed. The second filter part is rotatable (around the axis A) relative to the first filter part so that the locations of the perforations 302 of the second filter part 300 rotate relative to the perforations 202 in the first filter part 200. The first and second filter parts 200, 300, together form a filter unit 250 located in the flow channel.

In the example, the closure assembly further includes a spring 500 which is in engagement with the second filter part 300 and is biased to axially hold the second filter part adjacent to (ideally in axial abutment with) the first filter part.

The filter unit 250 operates as a closure mechanism for the fill port in that the second filter part 200 can rotate relative to the first filter part between a first (open) position in which the perforations 302 in the second filter part align with the perforations 202 in the first filter part, the aligned perforations thus permitting fluid flow through the filter unit, and a second (closed) position where the perforations in the two filter parts are out of alignment. The plate 301 of the second filter 302 thus creates a blind bore of the perforations 202 of the first filter element such that fluid is not able to pass through the filter unit 250.

Various ways of rotating the second filter part 300 relative to the first filter part 200 could be envisaged. In the claimed invention, the rotation of the second filter part is effected by providing means 320, 324 engaged with the second filter part and extending to the exterior of the port 100 to which a force can be applied to cause rotation of the second filter part. The force might be a rotation force, and might be applied manually.

In the claimed invention, as shown, the means are configured to receive an axial force and to translate that force into rotation of the second filter part 300. In example of how an axial force can be translated into a rotation of the second filter part is described with particular reference to Figs. 5 to 8. In this example, a track, groove or recess 320 is formed in the second filter part 300 e.g. in the cylindrical wall of the second filter part where this is a cylinder. The track, groove or recess (hereinafter 'groove' for simplicity) has a first end 321 at a first location and a second end 322 at a second location, the second location being spaced axially and circumferentially from the first location such that the groove defines a part-helix shape. The means to which a force may be applied further includes a pin 324 extending from outside the port, through an aperture 113 in the wall 115 of the port into engagement with the groove 322. The aperture 113 is larger than the diameter of the pin 324 so that the pin can move axially within the aperture when an axial force is applied to the pin. As the pin 324 is pressed axially downwards (further describe below) it moves in the groove 322 thus driving rotation of the second filter part 300. The axial force may be applied to the pin manually or, alternatively, by connection of a connector or hose or other fitting to the first end of the port as described further below.

In the example shown, in the first position, the close assembly is closed. This is typically the default position when no fluid is to be filled through the hydraulic port. In an aircraft system, this would be the normal or default state during flight, for example. In the first position, the spring 500 is biased to hold the second filter part in a rotational position, relative to the first filter part, where the perforations of the filter parts are not aligned and so no fluid flows through the filter unit 250.

Accurate location of the first and second filter parts relative to each other and rotation of the second filter part relative to the first filter part is ensured by means of a locating protrusion 220 extending from the first filter part and a locating groove 330 formed in the adjacent part of the second filter element 300 such that the projection 220 locates in the groove 330. The groove 330 is arcuate such that as the secondary filter part rotates, the protrusion 220 travels along the groove 330 between a first end 331 and a second end 332 of the groove. The groove 330 is preferably an open groove such that the protrusion comes into contact with the spring 500 as described further below. The force of the spring 500 biases the closure assembly to the closed position.

Whilst both the first and the second filter element have a generally circular cross-section to extend across the interior of the port, in one example, the first filter part may be provided with flattened sides 230 for the first filter part to engage in a conventional hydraulic port connector. This prevents rotation of the while filter unit when the connector/fitting is applied to the port.

Fig. 7 shows the closure assembly in the second, open position. In this position, the second filter element 300 is rotated relative to the first to a position in which its perforations are aligned with the perforations of the first filter element.

As mentioned above, this rotation could be performed by applying an axially downward force on the pin 324 which, by engagement in the groove 322, causes the second filter part to rotate. In one example, as shown, the opening of the closure assembly can be performed in an automatic way when an external connector 600, hose etc. is attached to the first end 101 of the port 100. In aircraft applications, this may be performed e.g. by ground maintenance staff. In this example, a flange or sleeve 700 is provided around the port, through which the pin 324 extends. The flange is located such that when the connector 600 is attached to the port it exerts an axially downward force on the flange and, thus, on the pin 324 that extends through the flange. As the pin 324, which is located in the helical groove 220, is pushed downwards, the groove rides along the pin causing rotation of the second filter element. The groove is designed such that when the pin reaches the end 322 of the groove, the perforations in the second filter part are aligned with those of the first filter part to provide a fluid flow passage through the filter unit 250.

The spring 500 maintains the axial position of the second filter part relative to the first to avoid and leakage between the perforations of the two filter parts. O-rings 800 may also be provided between the second filter part and the port to avoid leakage.

As mentioned above, and as illustrated again in Fig. 8, in the example shown, a protrusion 220 extending from the first filter element 200 engages in a groove 330 in the second filter element and contacts, through this groove 330, the spring 500. When moving to the open position, this protrusion 330 therefore compresses the spring 500. Once the external connector 600 is removed, thus removing the axial force on the flange and the pin, the second filter part 300 is released and the spring force causes the second filter part to rotate back to its first (closed) position.

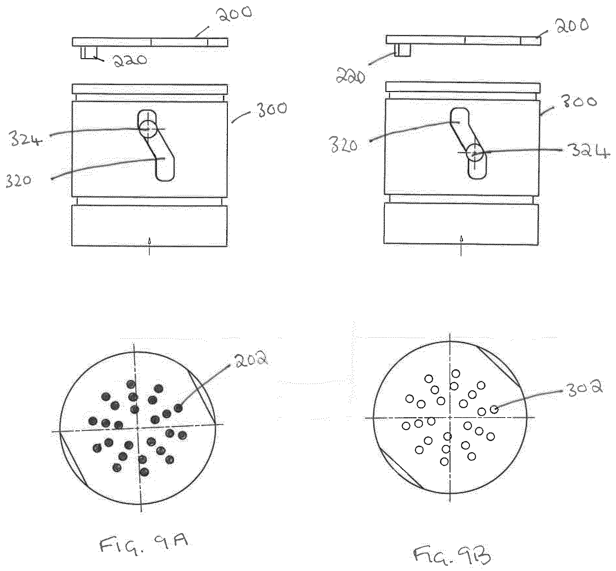

The first (open) position of the example described can be seen in Fig. 9A and the second (open) position can be seen in Fig. 9B.

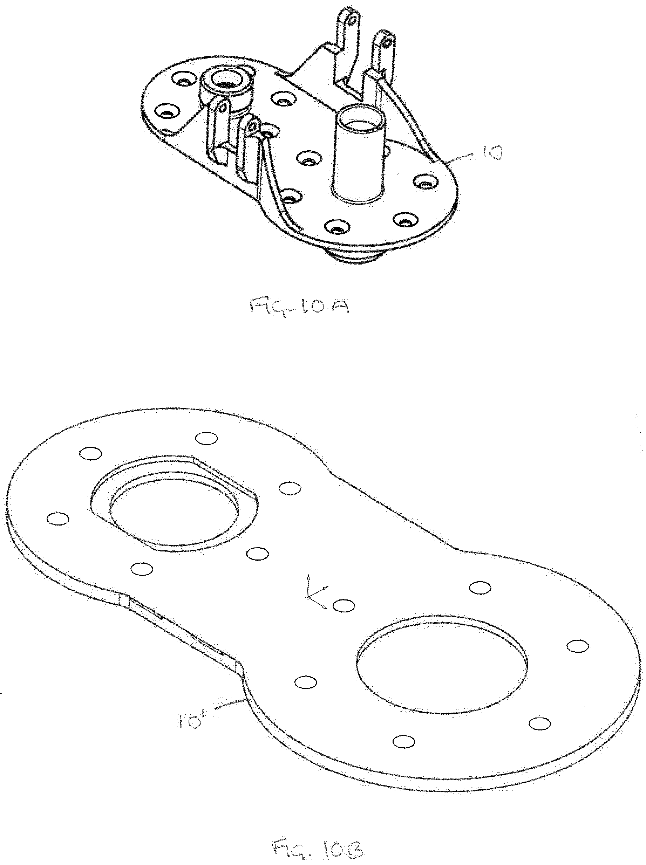

As can be seen by comparing Figs. 10A and 10B, the housing 10' of the present invention is much simpler and lighter and less machined than the housing 10 of the known design. As the housing is usually the most expensive part of the assembly, this is clearly advantageous. Also, a reduction in mass, number of parts and manufacturing costs and complexity is important in many fields including the aircraft industry.

The design of the invention avoids the need for flaps and hinges and so reduces the adverse effects of wear of those parts. By having the closures internal to the ports and, in some cases, opened automatically on attachment of a hose or connector, the opening and closing function requires much less space and the envelope of the assembly is greatly reduced. Furthermore, the assembly can be easily inspected for damage.

## Claims

1. A hydraulic port assembly comprising :
a housing (10') having an opening therethrough;
a first port (100) located in and extending through the opening defining a flow channel (102) through the first port from a first end (103) to a second end (104), the flow channel having an axis (A) defined between the first end and the second end; and
a closure mechanism moveable between an open position in which the flow channel is open and allows fluid flow therethrough and a closed position in which the flow channel is closed and prevents fluid flow therethrough,
wherein the closure mechanism comprises:
a filter unit (250) comprising a first filter part (200) located in the flow channel, and having perforations (202) formed therein to allow fluid flow in the flow channel through the first filter part; and
a second filter part (300) located in the flow channel axially adjacent the first filter part, the second filter part (200) being rotatable about the axis (A) relative to the first filter part, the second filter part having perforations (302) formed therein to allow fluid flow in the flow channel through the second filter part, the second filter part (300) rotatable, relative to the first filter part, about the axis (A) between a first position in which the perforations of the second filter part are aligned with the perforations of the first filter part allowing fluid flow through the filter unit, and a second position in which the perforations of the second filter part are not aligned with the perforations of the first filter part such as to prevent fluid flow through the filter unit;
the closure mechanism further comprising means (324, 320) for providing an external force to the second filter part (300) to cause the rotation thereof, **characterised in that** the means (324, 320) for providing an external force includes means (324, 320) for translation of an axial external force to a rotational force to cause the rotation of the second filter part (300).

2. The assembly of claim 1, the closure mechanism further comprising a spring (500) in contact with the second filter part configured to bias the second filter part axially against the first filter part.

3. The assembly of claim 1 or 2, wherein the means for providing an external force comprises a pin (324) engaging with the second filter part and extending through the port to the exterior of the port.

4. The assembly of any preceding claim, wherein the means for translation comprises a helically extending groove (320) in the second filter part and wherein the pin (324) engages with the groove when an external axial force is applied to the pin such that the groove rides on the pin to cause the rotation.

5. The assembly of any preceding claim, further comprising a flange (700) mounted around the port and configured to be engaged by a connector (600) applied to the port, the flange (700) engaging with the second filter part (300) such that application of the connector to the port causes the rotation of the second filter part (300) via the flange (700).

6. The assembly of claim 5 when dependent on claim **4,** wherein the pin (324) extends through the flange (700) such that axially downward movement of the flange caused by application of the connector (600) causes axially downward movement of the pin (324) and causes the groove to ride on the pin causing rotation of the second filter part (300).

7. The assembly of claim 2 or any claim dependent thereon, wherein a groove (330) is formed in the second filter part (300) and a protrusion (220) is formed on the first filter element (200), wherein the protrusion engages with the spring (500) through the groove (330) as the second filter part rotates relative to the first filter part.

8. The assembly of any preceding claim, wherein the first filter part (200) has flattened sides (230).

9. The assembly of any preceding claim, wherein the housing is in the form of a substantially flat plate.

10. The assembly of any preceding claim, the housing having a second opening therethrough, a second port (101) located in and extending through the second opening defining a second flow channel (111) through the second port from a first end to a second end, the second flow channel having a second axis defined between the first end and the second end; and
a second closure mechanism moveable between an open position in which the second flow channel is open and allows fluid flow therethrough and a closed position in which the second flow channel is closed and prevents fluid flow therethrough, wherein the second closure mechanism is a closure mechanism as the first closure mechanism.

11. The assembly of any preceding claim, wherein the first port is a fill port.

12. The assembly of any preceding claim, wherein the first port is configured to have a hose attached thereto.

13. The assembly of any preceding claim for attachment to a water system, optionally a water system of an aircraft.

## Patentansprüche

1. Hydraulikanschlussanordnung, umfassend:
ein Gehäuse (10'), das eine durch dieses hindurchgehende Öffnung aufweist;
einen ersten Anschluss (100), der sich in der Öffnung befindet und durch diese erstreckt, die einen Strömungskanal (102) durch den ersten Anschluss von einem ersten Ende (103) zu einem zweiten Ende (104) definiert, wobei der Strömungskanal eine Achse (A) aufweist, die zwischen dem ersten und dem zweiten Ende definiert ist; und
einen Verschlussmechanismus, der zwischen einer offenen Position, in der der Strömungskanal offen ist und die Fluidströmung durch diesen hindurch ermöglicht, und einer geschlossenen Position, in der der Strömungskanal geschlossen ist und die Fluidströmung durch diesen hindurch verhindert, bewegbar ist, wobei der Verschlussmechanismus Folgendes umfasst:
eine Filtereinheit (250) mit einem ersten Filterteil (200), das sich im Strömungskanal befindet und Perforationen (202) aufweist, um die Fluidströmung im Strömungskanal durch das erste Filterteil zu ermöglichen; und
ein zweites Filterteil (300), das sich axial neben dem ersten Filterteil im Strömungskanal befindet, wobei das zweite Filterteil (200) um die Achse (A) relativ zum ersten Filterteil drehbar ist, wobei das zweite Filterteil Perforationen (302) aufweist, die die Fluidströmung im Strömungskanal durch das zweite Filterteil ermöglichen, wobei das zweite Filterteil (300) relativ zum ersten Filterteil um die Achse (A) zwischen einer ersten Position, in der die Perforationen des zweiten Filterteils mit den Perforationen des ersten Filterteils ausgerichtet sind, sodass die Fluidströmung durch die Filtereinheit ermöglicht wird, und einer zweiten Position, in der die Perforationen des zweiten Filterteils nicht mit den Perforationen des ersten Filterteils ausgerichtet sind, sodass die Fluidströmung durch die Filtereinheit verhindert wird, drehbar ist;
Der Verschlussmechanismus umfasst ferner Mittel (324, 320) zur Bereitstellung einer äußeren Kraft auf den zweiten Filterteil (300), um dessen Drehung zu bewirken, **dadurch gekennzeichnet, dass** die Mittel (324, 320) zur Bereitstellung einer äußeren Kraft Mittel (324, 320) zur Umwandlung einer axialen äußeren Kraft in eine Drehkraft umfassen, um die Drehung des zweiten Filterteils (300) zu bewirken.

2. Die Anordnung nach Anspruch 1, wobei der Verschlussmechanismus ferner eine Feder (500) umfasst, die mit dem zweiten Filterteil in Kontakt steht und dazu dient, den zweiten Filterteil axial gegen den ersten Filterteil vorzuspannen.

3. Die Anordnung nach Anspruch 1 oder 2, wobei die Mittel zur Erzeugung einer äußeren Kraft einen Stift (324) umfassen, der mit dem zweiten Filterteil in Eingriff steht und sich durch die Öffnung nach außen erstreckt.

4. Die Anordnung nach einem vorhergehenden Anspruch, wobei die Mittel zur Translation eine spiralförmig verlaufende Nut (320) im zweiten Filterteil umfassen und wobei der Stift (324) in die Nut eingreift, wenn eine äußere axiale Kraft auf den Stift einwirkt, sodass die Nut auf dem Stift gleitet und die Drehung bewirkt.

5. Die Anordnung nach einem vorhergehenden Anspruch, ferner umfassend einen Flansch (700), der um den Anschluss herum angebracht ist und so konfiguriert ist, dass er mit einem am Anschluss angebrachten Verbinder (600) in Eingriff kommt, wobei der Flansch (700) mit dem zweiten Filterteil (300) so in Eingriff kommt, dass das Anbringen des Verbinders am Anschluss die Drehung des zweiten Filterteils (300) über den Flansch (700) bewirkt.

6. Die Anordnung nach Anspruch 5, abhängig von Anspruch 4, wobei sich der Stift (324) durch den Flansch (700) so erstreckt, dass eine durch das Aufsetzen des Verbinders (600) verursachte axiale Abwärtsbewegung des Flansches eine axiale Abwärtsbewegung des Stifts (324) bewirkt und die Nut auf dem Stift gleitet, wodurch eine Drehung des zweiten Filterteils (300) ausgelöst wird.

7. Die Anordnung nach Anspruch 2 oder einem davon abhängigen Anspruch, wobei im zweiten Filterteil (300) eine Nut (330) ausgebildet ist und am ersten Filterelement (200) ein Vorsprung (220) ausgebildet ist, wobei der Vorsprung beim Drehen des zweiten Filterteils relativ zum ersten Filterteil durch die Nut (330) mit der Feder (500) in Eingriff kommt.

8. Die Anordnung nach einem vorhergehenden Anspruch, wobei das erste Filterteil (200) abgeflachte Seiten (230) aufweist.

9. Die Anordnung nach einem vorhergehenden Anspruch, wobei das Gehäuse die Form einer im Wesentlichen flachen Platte aufweist.

10. Die Anordnung nach einem vorhergehenden Anspruch, wobei das Gehäuse eine zweite Durchgangsöffnung aufweist, wobei sich ein zweiter Anschluss (101) in der zweiten Öffnung befindet und sich durch diese erstreckt, und einen zweiten Strömungskanal (111) durch den zweiten Anschluss von einem ersten Ende zu einem zweiten Ende definiert wird, wobei der zweite Strömungskanal eine zweite Achse aufweist, die zwischen dem ersten Ende und dem zweiten Ende definiert ist; sowie einen zweiten Verschlussmechanismus, der zwischen einer offenen Position, in der der zweite Strömungskanal offen ist und einen Fluidstrom durch diesen ermöglicht, und einer geschlossenen Position, in der der zweite Strömungskanal geschlossen ist und einen Fluidstrom durch diesen verhindert, bewegbar ist, wobei der zweite Verschlussmechanismus ein Verschlussmechanismus ist, der dem ersten Verschlussmechanismus entspricht.

11. Die Anordnung nach einem vorhergehenden Anspruch, wobei der erste Anschluss ein Einfüllanschluss ist.

12. Die Anordnung nach einem vorhergehenden Anspruch, wobei der erste Anschluss so konfiguriert ist, dass daran ein Schlauch befestigt werden kann.

13. Die Montage eines vorhergehenden Anspruchs zur Befestigung an einem Wassersystem, gegebenenfalls an einem Wassersystem eines Flugzeugs.

## Revendications

1. Ensemble orifice de remplissage comprenant :
un boîtier (10') présentant une ouverture traversant celui-ci ;
un premier orifice de remplissage (100) situé dans et s'étendant à travers l'ouverture, définissant un canal d'écoulement (102) à travers le premier orifice depuis une première extrémité (103) jusqu'à une deuxième extrémité (104), le canal d'écoulement présentant un premier axe (A) défini entre la première extrémité et la deuxième extrémité ; et
un mécanisme de fermeture mobile entre une position ouverte, dans laquelle le canal d'écoulement est ouvert et permet l'écoulement de fluide à travers celui-ci, et une position fermée, dans laquelle le canal d'écoulement est fermé et empêche l'écoulement de fluide à travers celui-ci, dans lequel le mécanisme de fermeture comprend :
une unité de filtration (250) comprenant une première partie de filtre (200) située dans le canal d'écoulement, et comportant des perforations (202) formées dans celle-ci pour permettre l'écoulement du fluide dans le canal d'écoulement à travers la première partie de filtre ; et
une deuxième partie de filtre (300) située dans le canal d'écoulement axialement adjacente à la première partie de filtre, la deuxième partie de filtre (200) étant rotative autour de l'axe (A) par rapport à la première partie de filtre, la deuxième partie de filtre présentant des perforations (302) formées en elle pour permettre l'écoulement du fluide dans le canal d'écoulement à travers la deuxième partie de filtre, la deuxième partie de filtre (300) étant rotative, par rapport à la première partie de filtre, autour de l'axe (A) entre une première position dans laquelle les perforations de la deuxième partie de filtre sont alignées avec les perforations de la première partie de filtre permettant l'écoulement du fluide à travers l'unité de filtration, et une deuxième position dans laquelle les perforations de la deuxième partie de filtre ne sont pas alignées avec les perforations de la première partie de filtre de manière à empêcher l'écoulement du fluide à travers l'unité de filtration ;
le mécanisme de fermeture comprenant en outre des moyens (324, 320) pour fournir une force externe à la deuxième partie de filtre (300) afin de provoquer sa rotation, **caractérisé en ce que** les moyens (324, 320) pour fournir une force externe comprennent des moyens (324, 320) pour la translation d'une force externe axiale en une force de rotation afin de provoquer la rotation de la deuxième partie de filtre (300).

2. Ensemble selon la revendication 1, le mécanisme de fermeture comprenant en outre un ressort (500) en contact avec la deuxième partie de filtre configuré pour exercer une contrainte axiale sur la deuxième partie de filtre contre la première partie de filtre.

3. Ensemble selon la revendication 1 ou 2, dans lequel les moyens de fournir une force externe comprennent une goupille (324) venant en prise avec la deuxième partie de filtre et s'étendant à travers l'orifice jusqu'à l'extérieur de celui-ci.

4. Ensemble selon l'une quelconque des revendications précédentes, dans lequel les moyens de translation comprennent une rainure hélicoïdale (320) dans la deuxième partie de filtre, et dans lequel la broche (324) entre en prise avec la rainure lorsqu'une force axiale externe est appliquée à la broche de sorte que la rainure glisse sur la broche pour provoquer la rotation.

5. Ensemble selon l'une quelconque des revendications précédentes, comprenant en outre une bride (700) montée autour de l'orifice et configurée pour être mise en prise par un connecteur (600) appliqué à l'orifice, la bride (700) venant en prise avec la deuxième partie de filtre (300) de sorte que l'application du connecteur à l'orifice provoque la rotation de la deuxième partie de filtre (300) via la bride (700).

6. Ensemble selon la revendication 5 lorsqu'elle dépend de la revendication 4, dans lequel la broche (324) s'étend à travers la bride (700) de sorte qu'un mouvement axial vers le bas de la bride provoqué par l'application du connecteur (600) provoque un mouvement axial vers le bas de la broche (324) et provoque le glissement de la rainure sur la broche, provoquant la rotation de la deuxième partie du filtre (300).

7. Ensemble selon la revendication 2 ou toute revendication qui en dépend, dans lequel une rainure (330) est formée dans la deuxième partie du filtre (300) et une protubérance (220) est formée sur le premier élément de filtre (200), dans lequel la protubérance vient en prise avec le ressort (500) à travers la rainure (330) lorsque la deuxième partie du filtre tourne par rapport à la première partie du filtre.

8. Ensemble selon l'une quelconque des revendications précédentes, dans lequel la première partie de filtre (200) a des côtés aplatis (230).

9. Ensemble selon l'une quelconque des revendications précédentes, dans lequel le boîtier se présente sous la forme d'une plaque sensiblement plate.

10. Ensemble selon l'une quelconque des revendications précédentes, le boîtier présentant une deuxième ouverture traversant celui-ci, un deuxième orifice (101) étant situé dans et traversant la deuxième ouverture définissant un deuxième canal d'écoulement (111) à travers le deuxième orifice d'une première extrémité à une deuxième extrémité, le deuxième canal d'écoulement présentant un deuxième axe défini entre la première extrémité et la deuxième extrémité ; et un deuxième mécanisme de fermeture mobile entre une position ouverte dans laquelle le deuxième canal d'écoulement est ouvert et permet l'écoulement de fluide et une position fermée dans laquelle le deuxième canal d'écoulement est fermé et empêche l'écoulement de fluide, le deuxième mécanisme de fermeture étant un mécanisme de fermeture identique au premier mécanisme de fermeture.

11. Ensemble selon l'une quelconque des revendications précédentes, dans lequel le premier orifice est un orifice de remplissage.

12. Ensemble selon l'une quelconque des revendications précédentes, dans lequel le premier orifice est configuré pour permettre le raccordement d'un tuyau.

13. Ensemble selon l'une quelconque des revendications précédentes destiné à la fixation à un système d'eau, éventuellement un système d'eau d'un aéronef.
